# EUROPÄISCHE PATENTSCHRIFT

(11) **EP 1 668 261 B1**
(45) Veröffentlichungstag und Bekanntmachung des Hinweises auf die Patenterteilung: **29.04.2009**
(21) Anmeldenummer: 04766853.8
(22) Anmeldetag: 24.09.2004
(51) Int. Cl.: F16B 33/02, F16B 25/00

(54) **SCHRAUBENELEMENT, INSBESONDERE ZUR QUERZUG- UND/ODER QUERDRUCKVERSTÄRKUNG VON HOLZBAUTEILEN**
SCREW ELEMENT, PARTICULARLY FOR CROSS-PULL AND/OR CROSS-PRESSURE REINFORCEMENT OF WOODEN COMPONENTS
ELEMENT VIS, NOTAMMENT POUR LE RENFORCEMENT DE TRACTION ET/OU DE PRESSION TRANSVERSALE D'ELEMENTS EN BOIS

(30) Priorität: 02.10.2003 DE 20315202 U
(43) Veröffentlichungstag der Anmeldung: 14.06.2006
(73) Patentinhaber: ABC Verbindungstechnik GmbH & Co. KG, 58256 Ennepetal (DE)
(72) Erfinder: HOCHSTRATE, Micha, 40227 Düsseldorf (DE)
(74) Vertreter: Patentanwälte Dr. Solf & Zapf
(86) Internationale Anmeldenummer: PCT/EP2004/052304
(87) Internationale Veröffentlichungsnummer: WO 2005/033528

(56) Entgegenhaltungen:
- GB-A- 1 219 723
- GB-A- 2 072 781
- US-A- 3 924 508

## Beschreibung

Die vorliegende Erfindung betrifft ein Schraubenelement gemäß dem oberbegriff des Patentanspruchs 1, insbesondere zur Querzug-und/oder Querdruckverstärkung von Holzbauteilen durch Einsetzen in ein vorgebohrtes Kernloch, bestehend aus einem Gewindeschaft mit einem durchgehenden Gewinde und einem einendigen Kraftangriff zur Drehmoment-Beaufschlagung.

Die Literaturstelle "bauen mit holz", Heft 4/1999, Seiten 44 bis 49, beschäftigt sich mit Querzugverstärkungen von Holzbauteilen und beschreibt dazu u. a. die Möglichkeit, Schrauben in vorgebohrte Löcher des zu verstärkenden Holzbauteils, z. B. Holzbalkens, einzuschrauben. Ferner werden innenliegende Verstärkungen in Form von Stahlstäben beschrieben, die rechtwinkling zur Faserrichtung in das Holz eingeklebt werden, wobei es sich um Gewindebolzen bzw. Gewindestangen mit metrischem Gewinde handeln kann.

Die DE 100 13 810 A1 beschreibt einen Holz-Träger, der in auf Querzug belasteten Abschnitten in der beschriebenen Weise verstärkt ist, indem Schrauben von der Ober-oder Unterseite des Trägers quer zu dessen Längsrichtung verlaufend eingedreht sind, und zwar nur über einen Teil der Höhe des Trägers, so dass sie unmittelbar der auf Querzug belasteten Zone innerhalb des Trägers zugeordnet sind. Dazu sind die Schrauben im Bereich des Kraftangriffs mit einem Durchmesser ausgebildet, der annähernd gleich groß oder nur geringfügig größer als der Außendurchmesser des Gewindes ist. Dadurch kann der Kraftangriff mit in das Holz hinein versenkt werden.

Das Dokument GB-A-2 072 781 beschreibt eine übliche Holzschraube mit einem Schraubenkopf und einem gerollten Gewinde sowie mit einer endseitigen, sich verjüngenden Schraubenspitze. Zudem weist die bekannte Holzschraube zwischen dem Schraubenkopf und dem Gewindeabschnitt einen gewindefreien Abschnitt unmittelbar vor dem Gewindeabschnitt sowie einen sich an den Schraubenkopf anschließende, im Durchmesser vergrößerten Abschnitt auf. Demgemäß handelt es sich um eine übliche Holzschraube, die mit dem erfindungsgemäßen Schraubenelement nicht vergleichbar ist.

Die US-A-3 924 508 beschreibt eine 2-Komponenten-Schraube, die aus einem Schraubenkopf, einem sich anschließenden Gewindeschaft und einer gewindefreien Bohrerspitze besteht. Dabei soll der Schraubenkopf separat hergestellt und mit dem Schraubenschaft verschweißt werden.

Das weitere Dokument US-A-5 674 035 betrifft eine gewindeformende Schraube in unterschiedlichen Ausführungen, die allesamt mit einer Art Spitze oder zumindest mit einem vorderen Konusabschnitt ausgebildet sind.

Der vorliegenden Erfindung liegt die Aufgabe zugrunde, vor allem für den beschriebenen Anwendungsfall ein neuartiges Schraubenelement zu schaffen, welches gute Handhabungs- und Funktionseigenschaften aufweist, gleichzeitig aber auch besonders einfach und wirtschaftlich herstellbar ist.

Erfindungsgemäß wird dies durch die Merkmale des patentanspruchs 1 erreicht. Vorteilhafte Ausgestaltungsmerkmale der Erfindung sind in den abhängigen Ansprüchen enthalten. Demnach ist der Gewindeschaft von einem Gewindestangen-Abschnitt mit einer Länge von mindestens 600 mm gebildet, wobei das Gewinde als spanlos gewalztes, selbst-gewindeformendes Holzschraubengewinde in Form einer schraubenlinienförmig über einen zylindrischen Schaftkern verlaufenden, von zwei in einer äußeren Gewindekante zusammenlaufenden Flanken begrenzten Erhebung ausgebildet ist, und wobei der Kraftangriff von einem ursprünglich separaten, an ein Ende des Gewindestangen-Abschnittes angeschweißten Angriffsteil oder einem durch Anstauchen angeformten einstückigen Angriffsteil gebildet ist.

Das erfindungsgemäße Schraubenelement wird trotz seiner relativ großen Länge durch einen vorteilhaften Fertigungsprozeß hergestellt, und zwar durch Walzen, wobei es sich um eine Kaltmassivumformung handelt. Bisher wurden Schrauben in solchen Längen ausschließlich durch spanabhebende Verfahren, wie Drehen bzw. Fräsen, hergestellt. Durch die Erfindung werden demgegenüber folgende Vorteile erreicht:
- geringerer Rohmaterialeinsatz
- Vermeidung von Spanabfällen
- schnellerer Prozeßablauf
- insgesamt kostengünstige Herstellung.

Nach dem Walzen des Gewindestangen-Abschnittes braucht im Wesentlichen nur noch das Angriffsteil als Kraftangriff angeschweißt zu werden. Mit Vorteil kann das Angriffsteil von einer auf ein Ende des Gewindestangen-Abschnittes aufgesetzten und verschweißten Sechskant-Mutter gebildet sein. Sofern eine normgemäße Außensechskant-Mutter mit metrischem Innengewinde verwendet wird, kann diese auf ein gewindefreies, zylindrisches Ende des Gewindestangen-Abschnittes aufgesetzt und verschweißt werden, wozu das Ende einen dem Mutter-Kerndurchmesser etwa entsprechenden Außendurchmesser aufweisen sollte.

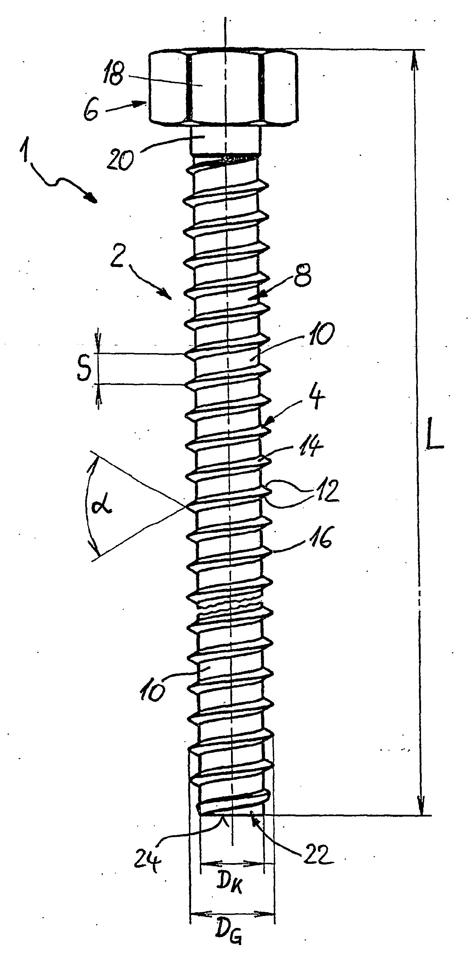

Anhand eines in der Zeichnung veranschaulichten, bevorzugten Ausführungsbeispiels soll die Erfindung genauer erläutert werden. Dabei zeigt die einzige Zeichnungsfigur ein erfindungsgemäßes Schraubenelement in einer (gekürzten) Seitenansicht.

Ein erfindungsgemäßes Schraubenelement 1 besteht aus einem Gewindeschaft 2 mit einem im Wesentlichen über die gesamte Länge L durchgehenden Gewinde 4 sowie mit einem einendigen Kraftangriff 6 zur Drehmoment-Beaufschlagung.

Erfindungsgemäß ist der Gewindeschaft 2 von einem Gewindestangen-Abschnitt 8 mit einer Länge L von mindestens 600 mm bis zu beispielsweise 3000 mm gebildet. Der Gewindestangen-Abschnitt 8 wird mit dem Gewinde 4 durch ei ne Kaltmassivumformung hergestellt, d. h. spanlos gewalzt. Dabei ist das Gewinde 4 als selbst-gewindeformendes Holzschraubengewinde (nach DIN 7998-4) in Form einer schraubenlinienförmig über einen zylindrischen Schaftkern 10 verlaufenden, von zwei Flanken 12 begrenzten Erhebung 14 ausgebildet, wobei die beiden Flanken 12 in einer äußeren Gewindekante 16 zusammenlaufen. Der Kraftangriff 6 ist dabei von einem ursprünglich separaten, an ein Ende des Gewindestangen-Abschnittes 8 angeschweißten Angriffsteil 18 gebildet. Es liegt aber ebenfalls im Rahmen der Erfindung, wenn der Kraftangriff 6 durch Anstauchen bzw. Anpressen einstückig am Gewindeschaft 2 angeformt ist. Dies ermöglicht eine kostengünstige Herstellung mit geringem Fehlerrisiko, wobei anders als beim Verschweißen die Gefügestruktur im Wesentlichen nicht durch Wärmebeeinflussung verändert wird.

Das Gewinde 4 definiert mit seiner äußeren Gewindekante 16 einen GewindeNenndurchmesser D_{G} von 12 mm bis 22 mm, insbesondere 16 mm. Der Schaftkern 10 weist einen Kerndurchmesser D_{K} von 9 mm bis 17 mm, insbesondere 12 mm, auf.

Das Angriffsteil 18 ist im dargestellten, bevorzugten Ausführungsbeispiel von einer Sechskant-Mutter gebildet, beispielsweise mit einer Schlüsselweite von 22 mm (SW 22). Es kann mit Vorteil eine handelsübliche Mutter mit einem metrischen Innengewinde verwendet werden. In diesem Fall sollte der Gewindestangen-Abschnitt 8 ein gewindefreies, zylindrisches Ende 20 mit einem dem Innendurchmesser der Mutter entsprechenden Außendurchmesser aufweisen.

Mit Vorteil besteht der Gewindestangen-Abschnitt 8 aus einem kaltumformbaren Stahl, insbesondere S 235 JR+C. Dieses bevorzugte Material weist eine Zugfestigkeit Rₘ = 565 N/mm² und eine Streckgrenze von 540 N/mm² auf.

Für die Handhabung beim Einschrauben ist es von Vorteil, wenn der Gewindestangen-Abschnitt 8 eine galvanisch verzinkte, gelb chromatierte und/oder gleitbeschichtete Oberfläche aufweist. Hierdurch kann das Einschrauben mit einem vorteilhaft geringen Einschraubdrehmoment von nur ca. 20 bis 40 Nm erfolgen. Zudem gewährleistet die Oberfläche einen guten und dauerhaften Korrosionsschutz.

Der Gewindestangen-Abschnitt 8 ist an seinem dem Kraftangriff 6 gegenüberliegenden Ende 22 ohne Spitze mit einer zur Längsachse senkrechten Stirnfläche 24 ausgebildet. Hierbei ist jedoch vorzugsweise die das Gewinde 4 bildende Erhebung 14 über einen bestimmten Bereich von vorzugsweise etwa einem vollständigen, eine Gewindesteigung S definierenden 360□- Umlauf hinweg mit einer in Richtung des Endes 22 bis auf etwa Null abnehmenden Höhe (radial) ausgebildet. Dies erleichtert das anfängliche Einschrauben in das etwa mit dem Kerndurchmesser D_{K} vorgebohrte Kernloch des jeweiligen Holzbauteils.

Die Gewindesteigung S des Gewindes 4 liegt im Bereich von 4 mm bis 8 mm und beträgt insbesondere etwa 6 mm. Die Flanken 12 des Gewindes begrenzen einen Flankenwinkel α von 50°bis 70°, insbesondere 60°.

Das erfindungsgemäße Schraubenelement 1 eignet sich aufgrund seiner beschriebenen Ausgestaltung besonders zur Querzug- oder Querdruckverstärkung bei großen Holzbauteilen (in der Regel aus Brettschichtholz). Durch eine Bereitstellung von großen Längen, beispielsweise in Standardlängen von 1000 mm bis 3000 mm, gestaffelt in 200 mm - Schritten, stellt das Schraubenelement 1 ein ideales Ersatzprodukt für eingeleimte metrische Gewindestangen dar. Besonders ideal ist es auch bei nachträglicher Sanierung unmittelbar vor Ort auf der Baustelle, da die Verarbeitung von der Außentemperatur unabhängig ist, weil ein Einbringen von Klebstoff entfallen kann. Zudem ist dadurch die Verarbeitung auch von unten über Kopf möglich. Durch die Vermeidung von Klebstoff werden zudem Kosten eingespart, ein gewisses Verarbeitungsrisiko vermieden, es ist keine zweite Person für die Klebstoffangabe notwendig und die Verarbeitung erfordert auch keine spezielle Schulung, wie sie für geklebte Verbindung notwendig ist. Die mechanische Verankerung des Holzgewindes ist sehr zuverlässig, indem sich das Gewinde 4 unter Selbstgewindeformung in das vorgebohrte Kernloch eindrückt. Die Verstärkungsstellen sind auch sehr unanfällig gegen bestimmte Störeinflüsse, wie Feuchtigkeit, Temperatur u.s.w.. Der jeweilige Träger erfährt durch das vorgebohrte Kernloch eine nur geringfügige Querschnittsschwächung. Das erfindungsgemäße Holzschraubengewinde ermöglicht zudem aufgrund seiner recht großen Steigung S ein schnelleres Eindrehen als bei metrischen Gewindestangen, wobei zudem auch höhere Drehzahlen möglich sind. Dies führt zu einer erheblichen Einsparung an Verarbeitungszeit. Durch ein geringes Einschraubdrehmoment von nur ca. 20 bis 40 Nm ist das erfindungsgemäße Schraubenelement 1 auch mit handgeführten Maschinen eindrehbar. Die besondere Oberflächenausführung, d. h. insbesondere die galvanische Verzinkung und die zusätzliche Gleitbeschichtung, sorgt für leichtes Eindrehen und dauerhaften Korrosionschutz. Das Schraubenelement 1 ist mit Säge oder Trennschleifer einfach und schnell auf beliebige Längen abtrennbar.

Die Erfindung ist nicht auf die dargestellten und beschriebenen Die Erfindung ist nicht auf die dargestellten und beschriebenen Ausführungsbeispiele beschränkt, sondern umfaßt auch alle im Sinne der Erfindung gleichwirkenden Ausführungen. Ferner ist die Erfindung bislang auch noch nicht auf die im Anspruch 1 definierte Merkmalskombination beschränkt, sondern kann auch durch jede beliebige andere Kombination von bestimmten Merkmalen aller insgesamt offenbarten Einzelmerkmalen definiert sein. Dies bedeutet, daß grundsätzlich praktisch jedes Einzelmerkmal des Anspruchs 1 weggelassen bzw. durch mindestens ein an anderer Stelle der Anmeldung offenbartes Einzelmerkmal ersetzt werden kann. Insofern ist der Anspruch 1 lediglich als ein erster Formulierungsversuch für eine Erfindung zu verstehen.

## Patentansprüche

1. Schraubenelement (1), insbesondere zum Einschrauben in Holzbauteile, bestehend aus einem Gewindeschaft (2) mit einem spanlos gewalzten, selbstgewindeformenden Holzschraubengewinde in Form einer schraubenlinienförmig über einen zylindrischen Schaftkern (10) verlaufenden, von zwei in einer äußeren Gewindekante (16) zusammentaufenden Flanken (12) begrenzten Erhebung (14) und einem einendig an dem Gewindeschaft (2) angeordneten Kraftangriff (6), der von einem ursprünglich separaten, an ein Ende des Gewindestangen-Abschnittes (8) angeschweißten Angriffsteil (18) oder einem durch Anstauchen angeformten einstückigen Angriffsteil (18) gebildet ist,
**dadurch gekennzeichnet, dass** der Gewindeschaft (2) von einem Gewindestangen-Abschnitt (8) mit einer Länge (L) von mindestens 600 mm mit einem über die gesamte Länge (L) durchgehenden Gewinde (4) gebildet ist und die äußere Gewindekante (16) einen GewindeNenndurchmesser (D_{G}) von 12 bis 22 mm, insbesondere 16 mm, definiert und der Schaftkern (10) einen Kerndurchmesser (D_{K}) von 9 bis 17 mm, insbesondere 12 mm, aufweist, wobei die das Gewinde (4) bildende Erhebung (14) in einem bestimmten Bereich von vorzugsweise etwa einem vollständigen, eine Gewindesteigung (S) definierenden 360 °-Umlauf hinweg mit einer in Richtung des Endes (22) bis auf etwa Null abnehmenden radialen Höhe ausgebildet ist, und wobei der Gewindestangenabschnitt (8) an seinem dem Kraftangriff (6) gegenüberliegenden Ende (22) ohne Spitze mit einer zur Längsachse senkrechten Stirnfläche (24) ausgebildet ist.

2. Schraubenelement nach Anspruch 1,
**dadurch gekennzeichnet, dass** die Länge (L) des Gewindestangen-Abschnittes (8) bis zu 3000 mm beträgt.

3. Schraubenelement nach einem der Ansprüche 1 oder 2,
**dadurch gekennzeichnet, dass** das Angriffsteil (18) von einer auf ein - insbesondere gewindefreies, zylindrisches - Ende (20) des Gewindestangen-Abschnittes (8) aufgesetzten und verschweißten Sechskant-Mutter gebildet ist.

4. Schraubenelement nach einem der Ansprüche 1 bis 3,
**dadurch gekennzeichnet, dass** der Gewindestangen-Abschnitt (8) aus einem kaltverformbaren Stahl, insbesondere S 235 JR+C, besteht.

5. Schraubenelement nach einem der Ansprüche 1 bis 4.
**dadurch gekennzeichnet, dass** der Gewindestangen-Abschnitt (8) eine galvanisch verzinkte, chromatierte und/oder gleitbeschichtete Oberfläche aufweist.

6. Schraubenelement nach einem der Ansprüche 1 bis 5,
**dadurch gekennzeichnet, dass** das Gewinde (4) eine Gewindesteigung (S) von 4 bis 8 mm, insbesondere etwa 6 mm aufweist.

7. Schraubenelement nach einem der Ansprüche 1 bis 6,
**dadurch gekennzeichnet, dass** das Gewinde (4) einen von den Flanken (12) begrenzten Flankenwinkel (α) von 50°bis 70°, insbesondere 60°aufweist.

8. Verwendung des Schraubenelementes nach einem der Ansprüche 1 bis 7 als Querzug- oder Querdruckverstärkung in vorgebohrten Kernlöchern von Holzbauteilen ohne den Einsatz von Klebstoff.

## Claims

1. A screw element (1), in particular for screwing into wooden components, comprising a threaded shank (2) with a self-tapping wood-screw thread rolled without cutting in the form of a raised portion (14), which extends in a helical manner over a cylindrical shank core (10) and which is bounded by two flanks (12) converging in an outer thread edge (16), and a force-application point (6) which is arranged at one end on the threaded shank (2) and which is formed by an originally separate application part (18) welded to one end of the threaded-rod portion (8) or by a one-piece application part (18) formed in an integral manner by upsetting, **characterized in that** the threaded shank (2) is formed by a threaded-rod portion (8) with a length (**L**) of at least 600 mm with a thread (4) continuous over the entire length (**L**), and the outer thread edge (16) defines a nominal thread diameter (**D_{G}**) of from 12 to 22 mm, in particular 16 mm, and the shank core (10) has a core diameter (**D_{K}**) of from 9 to 17 mm, in particular 12 mm, wherein the raised portion (14) forming the thread (4) is formed with a radial height decreasing in the direction of the end (22) to substantially zero in a specified area of preferably a substantially complete 360° periphery which defines a thread pitch (**S**), and wherein the end (22) - without a tip - of the threaded-rod portion (8) opposite the force-application point (6) is formed with an end face (24) at a right angle to the longitudinal axis.

2. A screw element according to Claim 1, **characterized in that** the length (**L**) of the threaded-rod portion (8) amounts to up to 3000 mm.

3. A screw element according to one of Claims 1 or 2, **characterized in that** the application part (18) is formed by a hexagon nut mounted and welded on one end (20) - in particular cylindrical and without a thread - of the threaded-rod portion (8).

4. A screw element according to any one of Claims 1 to 3, **characterized in that** the threaded-rod portion (8) consists of a cold-workable steel, in particular S 235 JR+C.

5. A screw element according to any one of Claims 1 to 4, **characterized in that** the threaded-rod portion (8) has an electro-galvanized, chromized and/or sliding-coated surface.

6. A screw element according to any one of Claims 1 to 5, **characterized in that** the thread (4) has a thread pitch (S) of from 4 to 8 mm, in particular approximately 6 mm.

7. A screw element according to any one of Claims 1 to 6, **characterized in that** the thread (4) has a flank angle (α), bounded by the flanks (12), of from 50° to 70°, in particular 60°.

8. Use of the screw element according to any one of Claims 1 to 7 as a transverse-pull or transverse-pressure reinforcement in pre-drilled core holes of wooden components without the use of adhesive.

## Revendications

1. Elément de vis (1), notamment pour le vissage dans des éléments de construction en bois, composé d'une tige filetée (2) avec un filet de vis à bois autotaraudeur, roulé sans enlèvement de copeaux, sous la forme d'une élévation (14) en forme d'hélice s'étendant sur un corps de tige cylindrique (10), délimitée par deux flancs (12) se rejoignant dans une arête de filet extérieure (16), et une prise de force (6) disposée à une extrémité sur la tige filetée (2), la prise de force (6) étant formée par une partie de prise (18) initialement séparée, soudée à une extrémité du segment de tige filetée (8), ou par une partie de prise (18) d'une seule pièce, rapportée par refoulement, **caractérisé en ce que** la tige filetée (2) est formée par un segment de tige filetée (8) d'une longueur (L) d'au moins 600 mm avec un filet (4) continu sur toute la longueur (L), **en ce que** l'arête de filet extérieure (16) définit un diamètre nominal de filet (D_{G}) de 12 à 22 mm, notamment de 16 mm, **en ce que** le corps de tige (10) présente un diamètre de corps (D_{K}) de 9 à 17 mm, notamment de 12 mm, dans lequel l'élévation (14) formant le filet (4) est formée dans une zone déterminée d'un enroulement de préférence complet de 360° et définissant un pas de vis (S), avec une hauteur radiale diminuant en direction de l'extrémité (22) jusqu'à environ zéro, et **en ce que** le segment de tige filetée (8), à son extrémité (22) opposée à la prise de force (6), est configuré sans pointe avec une face frontale (24) verticale par rapport à l'axe longitudinal.

2. Elément de vis selon la revendication 1, **caractérisé en ce que** la longueur (L) du segment de tige filetée (8) atteint 3000 mm.

3. Elément de vis selon l'une quelconque des revendications 1 ou 2, **caractérisé en ce que** la partie de prise (18) est formée par un écrou hexagonal posé sur une extrémité (20) cylindrique - notamment sans filet - du segment de tige filetée (8) et soudée.

4. Elément de vis selon l'une quelconque des revendications 1 à 3, **caractérisé en ce que** le segment de tige filetée (8) est constitué d'un acier déformable à froid, notamment l'acier S 235 JR+C.

5. Elément de vis selon l'une quelconque des revendications 1 à 4, **caractérisé en ce que** le segment de tige filetée (8) présente une surface galvanisée, chromatée et/ou munie d'un revêtement antifriction.

6. Elément de vis selon l'une quelconque des revendications 1 à 5, **caractérisé en ce que** le filet (4) présente un pas de vis (S) de 4 à 8 mm, notamment d'environ 6 mm.

7. Elément de vis selon l'une quelconque des revendications 1 à 6, **caractérisé en ce que** le filet (4) présente un angle de flanc (α), délimité par les flancs (12), de 50° à 70°, notamment de 60°.

8. Utilisation de l'élément de vis selon l'une quelconque des revendications 1 à 7 comme renforcement en traction transversale ou en pression transversale dans des avant-trous pré-percés pour des éléments de construction en bois, sans utilisation d'adhésif.
